(19)

Europäisches
Patentamt
European
Patent Office
Office européen
des brevets

(11) **EP 4 024 599 A2**

(12) **EUROPEAN PATENT APPLICATION**

(43) Date of publication:
**06.07.2022 Bulletin 2022/27**

(21) Application number: **22150088.7**

(22) Date of filing: **03.01.2022**

(51) International Patent Classification (IPC):
$H01M\ 50/449$ (2021.01)    $H01M\ 50/434$ (2021.01)
$H01M\ 50/443$ (2021.01)    $H01M\ 50/446$ (2021.01)
$H01M\ 50/417$ (2021.01)    $H01M\ 50/414$ (2021.01)
$H01M\ 50/403$ (2021.01)    $H01M\ 10/052$ (2010.01)

(52) Cooperative Patent Classification (CPC):
**H01M 50/449; H01M 50/403; H01M 50/414;**
**H01M 50/417; H01M 50/434; H01M 50/443;**
**H01M 50/446;** H01M 10/052

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **05.01.2021 KR 20210000759**

(71) Applicants:
• **SK Innovation Co., Ltd.**
**Seoul 03188 (KR)**

• **SK ie technology Co., Ltd.**
**Jongno-gu**
**Seoul**
**03188 (KR)**

(72) Inventor: **JI, Sang Yoon**
**34124 Daejeon (KR)**

(74) Representative: **Stolmár & Partner**
**Patentanwälte PartG mbB**
**Blumenstraße 17**
**80331 München (DE)**

(54) **SEPARATOR HAVING EXCELLENT THERMAL CONDUCTIVITY AND ELECTROCHEMICAL ELEMENT USING THE SAME**

(57) Provided are a secondary battery separator having excellent heat dissipation characteristics and thermal stability compared to the conventional polyolefin-based separator, and an electrochemical element for both securing safety and improving performance, including the separator.

【FIG. 1】

EP 4 024 599 A2

**Description**

[Technical Field]

The following disclosure relates to a separator having excellent thermal conductivity and an electrochemical element using the same. More particularly, the following disclosure relates to a separator having excellent thermal conductivity compared to a conventional polyolefin-based separator.

[Background Art]

Recently, the capacity and size of secondary batteries have been increased in order to be applied to vehicles, etc. The use of the battery increases an internal temperature thereof and heats the solvent of the electrolyte, and thus problems such as expansion or ignition due to an explosion occur, thereby causing a serious threat to safety of the battery.
In order to solve problems such as battery fire caused by forced internal short circuit due to external shock to secure such safety, a ceramic layer made of inorganic particles or inorganic particles and organic particles is introduced on a porous sheet such as polyolefin, and thus, the safety of the battery is secured and the battery can be commercialized.
However, even in the case of a separator having such a ceramic layer, as the internal temperature of the battery rises during use due to increased capacity, there is a limitation in controlling the expansion of an internal electrolyte and the possibility of ignition due to leakage of the electrolyte.
Therefore, it is necessary to study a new separator or a battery using the separator that smoothly transfers the heat to the outside when the temperature rises due to the use of the battery to suppress unintended ignition caused by a local temperature rise.

[Related Art Document]

Korean Patent Laid-Open Publication No. 10-2019-0067397 (June 17, 2019)

[Disclosure]

[Technical Problem]

The present inventor completed the present invention by finding that a separator having excellent heat dissipation properties may be manufactured by adopting a ceramic layer of the separator, that is, particles containing silicon particles on which an oxide film is formed as the particles forming a porous active layer as a result of performing many studies in order to solve the above problem.
An embodiment of the present invention is directed to providing a separator having excellent thermal conductivity properties compared to a conventional polyolefin-based separator.
Another embodiment of the present invention is directed to providing a new separator in which a difference in temperature is equalized over an entire area of the separator due to high thermal conductivity during local heating.
Another embodiment of the present invention is directed to providing a new separator having significantly improved thermal shrinkage resistance compared to a conventional separator having a ceramic particle layer.
Another embodiment of the present invention is directed to providing a new separator having significantly excellent in-plane thermal conductivity.
Another embodiment of the present invention is directed to providing an electrochemical device having excellent performance, specifically, a lithium secondary battery.
Another embodiment of the present invention is directed to providing a new separator in which the difference in temperature is equalized over an entire area of the separator due to high thermal conductivity during local heating.
Another embodiment of the present invention is directed to providing a new separator having significantly improved thermal shrinkage resistance compared to a conventional separator having a ceramic particle layer.
Another embodiment of the present invention is directed to providing a new separator having significantly excellent in-plane thermal conductivity.

[Technical Solution]

In one general aspect, a separator includes: (a) a porous substrate; and (b) an active layer formed on one surface or both surfaces of the porous substrate and including particles including core-shell silicon particles having an oxide film shell layer.
The core-shell silicon particles may have a size of 0.001 to 20 $\mu$m, and preferably 10 to 5000 nm.

The silicon particles having the oxide film shell may be manufactured by friction of the silicon particles in an aqueous solution to oxidize the surface, or by plasma or corona treatment in air, ozone, or oxygen atmosphere to form a surface oxide layer.

The active layer provides includes mixed particles of core-shell silicon particles having the oxide film shell layer and other inorganic particles.

The inorganic particles may be any one or two or more selected from a metal oxide, a metal nitride, a metal carbide, a metal carbonate, a metal hydrate, and a metal carbonitride. For example, the inorganic particles may be one or two or more selected from boehmite, $Ga_2O_3$, SiC, $SiC_2$, Quartz, NiSi, Ag, Au, Cu, Al, Ag-Ni, ZnS, $Al_2O_3$, $TiO_2$, $CeO_2$, MgO, NiO, $Y_2O_3$, CaO, $SrTiO_3$, $SnO_2$, ZnO, $ZrO_2$, lithium-based inorganic materials, piezoelectric inorganic metal mixtures, and composite metal oxides of these metals.

The inorganic particles may have a size of 0.001 to 20 $\mu$m.

In the active layer, the content of core-shell silicon particles may be 50 to 99.9% by weight of the total active layer.

The active layer may further include an organic binder, and the organic binder is not particularly limited, but may be, for example, any one or two or more selected from polyvinyl alcohol, polyvinyl acetate, ethylene vinyl acetate copolymer, polyethylene oxide, cellulose acetate, cellulose acetate butyrate, cellulose acetate propionate, polyvinylidene fluoride-hexafluoropropylene, polyvinylidene fluoride-trichloroethylene, polymethyl methacrylate, polyacrylonitrile, polyvinylpyrrolidone, cyanoethylpullulan, cyanoethyl polyvinyl alcohol, cyanoethyl cellulose, cyanoethyl sucrose, pullulan, carboxyl methyl cellulose, acrylonitrile styrene butadiene copolymer, polyimide, or a mixture thereof.

The porous substrate may be one or more selected from the group consisting of high-density polyethylene, low-density polyethylene, linear low-density polyethylene, ultra-high molecular weight polyethylene, polypropylene, and copolymers thereof. In addition, the porous substrate may be polyester-based, polyamide-based, polyimide-based, polyamideimide-based, polyacrylate-based, polyether-based polymer, polyvinylcloride-based, polyvinyl alcohol-based, or copolymers thereof.

The separator may have a thickness of 5 to 100 $\mu$m.

The porous substrate or separator may have a pore size in the range of 0.001 to 10 $\mu$m, and the porosity in the range of 5 to 95%.

In another general aspect, an electrochemical element includes: a positive electrode, a negative electrode, a separator, and an electrolyte, wherein the separator is the separator as described above.

In another general aspect, there is provided a method for manufacturing a separator, the method includes: coating a dispersion solution on one surface or both surfaces of a porous substrate, the dispersion solution containing particles including silicon particles having an oxide film shell and a binder; and drying the porous substrate on which the dispersion solution is coated to form a porous active layer.

[Advantageous Effects]

The separator according to the present invention may provide a separator having excellent thermal conductivity properties compared to a conventional polyolefin-based separator.

In addition, due to its high heat conductivity, when the temperature rises locally during local heating, heat transfer is carried and heat dissipation properties are excellent, so that the difference in temperature over the entire area of the separator is equalized, and thus, it is possible to provide a new separator in which a local temperature rise is prevented and the safety of the battery is dramatically improved.

The separator according to the present invention may provide a separator having excellent heat dissipation properties having excellent in-plane thermal conductivity compared to using conventional boehmite particles.

In addition, it is possible to provide a new separator having significantly improved thermal shrinkage resistance compared to a conventional separator having a ceramic particle layer.

Further, it is possible to provide a new separator having significantly excellent in-plane thermal conductivity.

Furthermore, it is possible to provide an electrochemical device having excellent performance, specifically, a lithium secondary battery.

[Description of Drawings]

FIG. 1 is a result of evaluating heat spreading performance of Example 1 of the present invention.

FIG. 2 is a result of evaluating heat spreading performance of Comparative Example 1 of the present invention.

[Best Mode]

Hereinafter, the present invention will be described in detail. The following exemplary embodiments are only a reference for describing the present invention in detail, and the present invention is not limited thereto, and may be implemented in various forms.

In addition, all technical terms and scientific terms have the same meanings as those commonly understood by a person skilled in the art to which the present invention pertains unless otherwise defined. The terms used herein are only for effectively describing a certain exemplary embodiment, and not intended to limit the present invention.

One aspect of the present invention may provide a separator including (a) a porous substrate; and (b) an active layer formed on one surface or both surfaces of the porous substrate and including core-shell-type silicon particles on which an oxide film is formed.

In an aspect of the present invention, the core-shell silicon particles on which an oxide film is formed may be core-shell silicon particles in which an oxide film is formed on the surface by frictional heat by dispersing single crystal or polycrystalline silicon particles in water and milling the single crystal or polycrystalline silicon particles to collide the single crystal or polycrystalline silicon particles with each other.

Silicon particles, which are the raw material particles, may be manufactured by pulverizing a silicon wafer, or may also be used by purchasing commercially available silicon particles. When silicon particles are purchased and used, either silicon single crystal or polycrystalline particles may be used to exhibit heat spreading properties due to the high heat conductivity of the present invention.

Specifically, the present invention is to provide a separator having excellent thermal conductivity properties compared to the conventional polyolefin-based separator, for example, to provide a novel separator that equalized and stabilizes a difference in temperature over the entire area of the separator while improving safety by transferring heat to other peripheral portions to prevent local temperature rise due to high thermal conductivity when the local temperature rises in one part of the separator inside the battery.

For example, the present invention is to provide a separator having excellent heat dissipation properties, which is 2 to 5 times or more excellent in in-plane thermal conductivity compared to an active layer formed of conventional boehmite particles.

In addition, the present invention is to provide electrochemical device having excellent performance, specifically, a lithium secondary battery.

In one aspect of the present invention, when the silicon wafer is pulverized and used, the size of the particles may be adjusted by performing a bead mill on the pulverized material to collide with the beads. For example, when pulverization is sufficiently performed using 0.3 mm beads, silicon particles with an average size of 0.5 $\mu$m may be obtained and when pulverization is performed using a 0.65 mm bead, silicon particles of 1.0 $\mu$m may be prepared. Thus, the size of the silicon particles may be adjusted by appropriately adjusting the size of the beads.

In addition, as a method for preparing oxide film surface-modified core-shell silicon particles, it is possible to prepare core-shell silicon particles on which an oxide film is formed through various methods such as a method of synthesizing silicon particles using a precursor or oxidizing the surface by contacting silicon particles prepared by pulverizing as described above with high-temperature water vapor; a method of oxidizing a surface using oxygen plasma; or a method of surface oxidation by ozone corona treatment, in addition to a method of controlling a thickness of $SiO_2$ by oxidizing a surface using frictional heat generated while grinding bulk silicon to a desired particle size (top-down), and thus, the method is not particularly limited.

In an aspect of the present invention, the size of the core-shell silicon particles having the oxide film shell layer is not particularly limited, and, for example, the average particle diameter may be in the range of 10 to 5000nm.

A shape of the silicon particles is not particularly limited, and may be, for example, a circular shape, a prismatic shape, an oval shape, a random shape, or mixtures thereof.

Also, in an aspect of the present invention, the thickness of the oxide film is not particularly limited, but may be, for example, 1 nm to 50 nm, preferably 2 to 20 nm, but is not necessarily limited thereto.

In an aspect of the present invention, the active layer may further include a binder of the core-shell silicon particles having the oxide film shell layer and other inorganic or organic particles or mixed particles thereof.

In an aspect of the present invention, the content of the core-shell silicon particles may be 50 to 99.9% by weight of the total active layer. The remaining components may be a binder as a main component. In addition, when the active layer further includes inorganic particles or organic particles, the content of the silicon particles may be 50 to 99.9% by weight of the total particle content.

In one aspect of the present invention, the inorganic particles may be any one or two or more selected from a metal oxide, a metal nitride, a metal carbide, a metal carbonate, a metal hydrate, and a metal carbonitride.

Specifically, the inorganic particles are not particularly limited as long as they are inorganic particles commonly used in the field, but, examples thereof include, but are not limited to, one or two or more selected from boehmite, $Ga_2O_3$, SiC, $SiC_2$, Quartz, NiSi, Ag, Au, Cu, Al, Ag-Ni, ZnS, $Al_2O_3$, $TiO_2$, $CeO_2$, MgO, NiO, $Y_2O_3$, CaO, $SrTiO_3$, $SnO_2$, ZnO,

ZrO$_2$, lithium-based inorganic materials, piezoelectric inorganic metal mixtures, and composite metal oxides of these metals.

A shape of the particles is not particularly limited, but may be, for example, a circular shape, a prismatic shape, an oval shape, a random shape, or mixtures thereof.

In the case of the above particles, the size is not particularly limited as long as the object of the present invention may be achieved, but, for example, the average particle sizer may be in the range of 0.001 to 20 $\mu$m.

The binder is not particularly limited as long as the object of the present invention is achieved, and examples of thereof include polyvinyl alcohol, polyvinyl acetate, ethylene vinyl acetate copolymer, polyethylene oxide, cellulose acetate, cellulose acetate butyrate, cellulose acetate propionate, polyvinylidene fluoride-hexafluoropropylene, polyvinylidene fluoride-trichloroethylene, polymethyl methacrylate, polyacrylonitrile, polyvinylpyrrolidone, cyanoethylpullulan, cyanoethyl polyvinyl alcohol, cyanoethyl cellulose, cyanoethyl sucrose, pullulan, carboxyl methyl cellulose, acrylonitrile styrene butadiene copolymer, polyimide, a mixture thereof, etc. In addition to those mentioned above, as long as they are used as binders for secondary battery separators, they may be used without particular limitation.

The content of the binder in the active layer may be 0.1 to 50% by weight, preferably 0.2 to 10% by weight.

The thickness of the active layer is not particularly limited as long as it achieves the object of the present invention, but, for example, a thickness of 1 to 30 $\mu$m, preferably 2 to 10 $\mu$m, is preferred, but is not limited thereto.

In an aspect of the present invention, the active layer may further include other commonly known additives in addition to the core-shell silicon particles and inorganic particles as described above.

The thickness of the active layer is not particularly limited, but is preferably in the range of 0.01 to 20 $\mu$m. In addition, the pore size and porosity of the active layer may be obtained by the size of silicon particles or inorganic particles, and is not particularly limited, but, for example, is preferably in the range of 0.001 to 10 $\mu$m, more preferably in the range of 0.001 to 5 $\mu$m and 10 to 95%, respectively, but is not necessarily limited thereto.

In an aspect of the present invention, the porous substrate may be variously used such as a porous polymer film made of a polymer used as a separator, a sheet, a nonwoven fabric, a woven fabric, etc., and may also include a porous substrate having a laminate structure in which each layer is laminated in two or more layers.

Preferably, examples of the polyolefin-based porous film include, but are not limited to, low-density polyethylene, linear low-density polyethylene, high-density polyethylene, ultra-high molecular weight polyethylene, polypropylene, the above copolymers, or derivatives thereof.

The thickness of the porous substrate is not particularly limited as long as the object of the present invention is achieved, but may be in the range of 1 to 100 $\mu$m, preferably 5 to 60 $\mu$m, and more preferably 5 to 30 $\mu$m.

In addition, the pore size and porosity of the porous substrate are not particularly limited, but the porosity is preferably in the range of 5 to 95%, more preferably in the range of 10 to 95%, and the pore size (diameter) is 0.01 to 20 $\mu$m, preferably 0.05 to 5 $\mu$m, but the present invention is not necessarily limited thereto.

The thickness of the separator of the present invention is not particularly limited, and, for example, preferably in the range of 1 to 100 $\mu$m, more preferably in the range of 1 to 50 $\mu$m.

Hereinafter, a method for manufacturing the separator of the present invention will be described.

An aspect of the present invention is a method for manufacturing a separator including: coating a dispersion containing particles including silicon particles having an oxide film shell on one surface or both surfaces of a porous substrate, and a binder; and drying the porous substrate on which the dispersion solution is coated to form a porous active layer.

In the present invention, a dispersion may be prepared by dissolving or dispersing the binder in an appropriate dispersion solvent, and then introducing particles including core-shell silicon particles having an oxide film shell, or a dispersion may be prepared by simultaneously adding core-shell silicon particles having the binder and an oxide films shell to an appropriate dispersion solvent.

As the dispersion solvent, water may be mainly used, and lower alcohols such as ethanol, methanol and propanol, solvents such as dimethylformamide, acetone, tetrahydrofuran, diethyl ether, methylene chloride, DMF, N-methyl-2-pyrrolidone, hexane, cyclohexane, or a mixture thereof may also be used, but the present invention is not necessarily limited thereto.

In addition, it is preferable to use the dispersion to crush the aggregates of the core-shell silicon particles or particles including the core-shell silicon particles using a ball mill, a bead mill, a planetary mixer (pulverization and mixing method through rotation/revolution rotation) and a homogenizer, etc.

In this case, the crushing time is preferably 0.01 to 20 hours, and the particle size of the crushed inorganic particles is preferably 0.001 to 10 $\mu$m as mentioned above.

The dispersion may be coated on a porous substrate and dried to obtain a porous separator having the active layer of the present invention. Preferably, the dispersion may be coated on a polyolefin-based porous film and dried to obtain the separator of the present invention.

The coating method is not particularly limited, but, for example, a conventional coating method such as knife coating, roll coating, die coating, dip coating, spray coating, flow coating, etc. may be used, so the coating method not described above is not excluded.

The separator of the present invention manufactured as described above may be used as a separator for an electrochemical element, for example, a lithium secondary battery. The electrochemical element is not particularly limited, but examples thereof include primary and secondary batteries, fuel cells, capacitors, etc.

When the separator of the present invention is typically used in a battery, a general manufacturing method of disposing and assembling a negative electrode, a separator and a positive electrode and injecting an electrolyte is used, and thus, a detailed description thereof will not be provided here.

The positive electrode of the present invention is not limited as long as it is a conventional material, and may include, for example, lithiated magnesium oxide, lithiated cobalt oxide, lithiated nickel oxide, a complex oxide formed by a combination thereof, etc.

As a negative electrode active material, a conventional negative electrode active material may be used, and non-limiting examples thereof include lithium metal, activated carbon, carbon-based materials such as graphite, etc., but are not particularly limited thereto.

The positive electrode active material and the negative electrode active material are used by binding to a positive electrode current collector or a negative electrode current collector, respectively. As the positive electrode current collector, aluminum foil, nickel foil, etc. may be used, and the negative electrode current collector is selected from copper, nickel, etc., but is not limited as long as it is commonly used and all of them may be used without limitation.

The electrolyte to be used in the present invention is also not limited as long as it is used in this field, and thus, a detailed description thereof will not be provided here.

Hereinafter, preferred Examples are presented to assist the understanding of the present invention, but the following Examples are only illustrative of the present invention and the scope of the present invention is not limited to the following Examples.

**Physical property evaluation**

1. Thermal shrinkage evaluation

After a separator of 10 cm x 10 cm in width and length were left at 130°C, 150°C for 1 hour, respectively, reduction rates in a machine direction (MD) and a transverse direction (TD) were respectively measured to measure thermal shrinkage.

$$\text{Thermal shrinkage} = (\text{Length before heat treatment} - \text{Length after heat treatment})/(\text{Length before heat treatment}) \times 100$$

2. Gurley permeability

A Gurley permeability was measured as a gas permeability. The Gurley permeability was measured according to ASTM D726 standard using a densometer available from Toyoseiki. The time taken for 100 cc of air to pass through the area of 1 square inch of the separator was recorded in seconds, and the values were compared. The gas permeability described in Table 1 was calculated using the following Equation.

$$\Delta\text{Gurley permeability (sec)} = \text{Gas permeability of the separator on which porous active layer is formed} - \text{Gas permeability of porous substrate}$$

3. Moisture content measurement

The moisture of the separator was measured using a Karl Fischer method. The moisture content was measured using a Karl Fischer titrator available from Metrohm AG. This is a method of measuring the moisture content of the specimen by using the weight of moisture generated when 0.3 g of the specimen was heated to 150°C.

4. Cell resistance measurement

For the batteries manufactured through each assembly process, each impedance was measured using a charge/discharge cycle device in the following way, and the results are shown in Table 1.

A chamber temperature was maintained at room temperature (25°C) using the device, and as a method of measuring the lifetime and resistance at room temperature, it is charged with a constant current-constant voltage (CC-CV) to 4.2V and then discharged to 2.5V. Charging/discharging was measured by performing charging from 4.2V to 2.5V, charging at 0.5C/discharging at 0.5C 20 times. The average of the DC-IR impedance values of each cycle during the process is shown. The contents of a resistance increase rate described in Table 1 were calculated and described using the following Equation.

$$\text{Resistance increase rate (\%)} = ((\text{resistance of separator including coating layer} - \text{resistance of PE film}) / \text{resistance of PE film}) \times 100$$

5. Thermal conductivity measurement

The thermal conductivity was measured using a thin film and film in-plane thermal conductivity meter (LaserPIT-M2). A thermal diffusion coefficient was obtained from an amplitude or phase difference of a temperature response at a position deviated by a certain distance from the heating region when the laser light was periodically modulated and delivered, and was calculated and described using the following Equation.

$$\text{Thermal conductivity (W/m·K)} = \text{Thermal diffusion coefficient (m}^2\text{/s)} \times \text{Density (kg/m}^3\text{)} \times \text{Heat capacity (J/kg·K)}$$

6. Thermal diffusion performance evaluation

A 7 cm x 7cm separator was prepared, and a 1 cm x 1 cm film heater was closely attached to the center and heated to 100°C. The performance was evaluated by measuring the temperature at three positions spaced apart from the center of the heater (Tmax) at the same distance using a thermal imaging camera.

7. Breakdown voltage measurement

The breakdown voltage of the separator was measured using a HIPOT tester (hioki, Japan). A 2.5 cm x 2.5 cm separator was placed between the positive electrodes cut to 2 cm x 5 cm, and then a voltage was applied to the positive electrode using a HIPOT tester to determine a short circuit when 100mA 3.0s was maintained, and the voltage at this time was recorded.

[Example 1]

<Manufacture of separator>

An aqueous dispersion having a solid content of 30% by weight was prepared by dissolving and dispersing 4% by weight of water-soluble polyvinyl alcohol and 96% by weight of core-shell silicon particles having a 10 nm oxide film shell layer having an average particle size of 1 $\mu$m. The aqueous dispersion was ball milled for 3 minutes to prepare an aqueous dispersion slurry. The prepared slurry was thoroughly dried by slot die coating on both sides of an 11 $\mu$m polyethylene separator (porosity 51%), and the active layer had a thickness of 2.6 $\mu$m on one side and a total thickness of 5.2 $\mu$m on each side. The physical properties, thermal shrinkage, thermal conductivity, and moisture content of the coating layer of the manufactured separator were measured and recorded in Table 1.

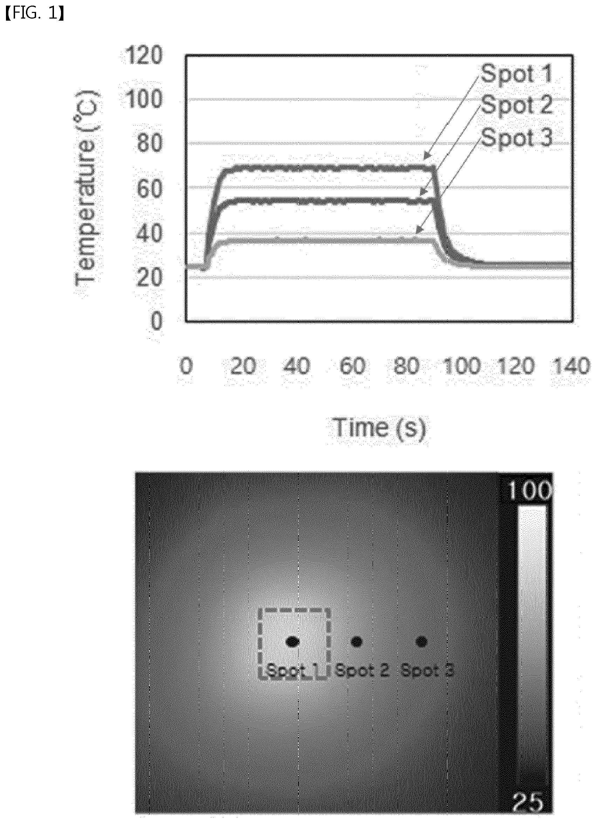

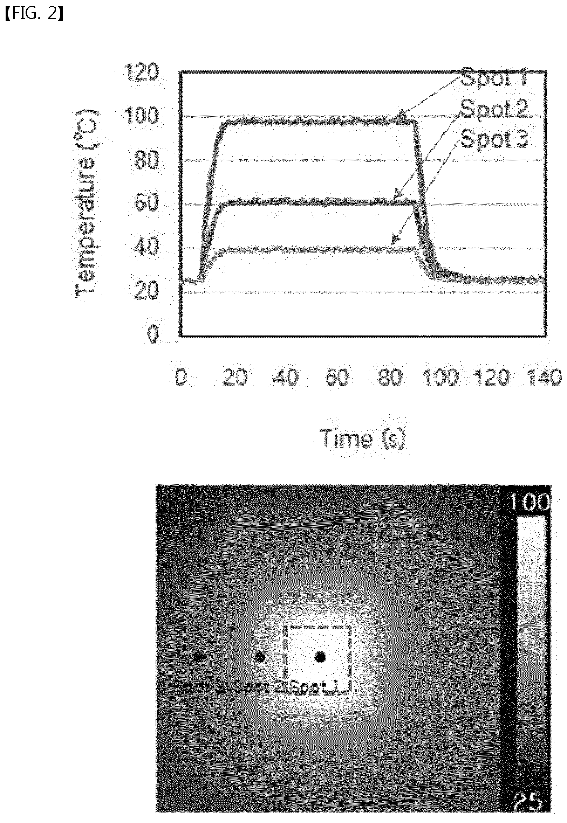

In addition, as a result of evaluating the heat spreading performance, it can be seen that in the case of Example 1 (FIG. 1), as a result of measuring a portion spaced from the center at the same distance, heat spreading was excellent as the difference between the central heat source and the outer shell of the third point was about 33°C in terms of a heat deviation, so a temperature deviation between the center and the periphery was low, and the temperature of the center was also only 70°C, so heat transfer was excellent. However, it can be seen that in the case of Comparative Example 1 using only boehmite particles (FIG. 2), the temperature of the center was 97°C, so heat diffusion was not excellent, a temperature deviation from the center to the third point also showed a deviation of 60°C, and in the case of a local temperature rise, heat concentration would be high, which would have a poor effect on the performance of the separator. That is, it can be seen that in the case of FIG. 2, the central temperature with the heat source was 97°C, indicating an overheated state, but in the case of FIG. 1 corresponding to Example 1 of the present invention, even when exposed to the same heat source, the temperature of the central portion where the heat source is located was heat spread and lowered to 70°C, such that the heat dissipation properties of the present invention may be well understood.

<Manufacture of lithium secondary battery>

**<Manufacture of positive electrode>**

94% by weight of $LiCoO_2$ as a positive electrode active material, 2.5% by weight of polyvinylidene fluoride as an adhesive, 3.5% by weight of carbon-black as a conductive material were added to N-methyl pyrrolidone (NMP) as a solvent and stirred to prepare a uniform positive electrode slurry. The slurry was coated on an aluminum foil having a thickness of 30 $\mu$m, dried at a temperature of 120°C, and compressed to manufacture a positive electrode plate having a thickness of 150 $\mu$m.

**<Manufacture of negative electrode>**

95% by weight of artificial graphite as a negative electrode active material, 3 wt% of an acrylic latex (product name: BM900B solid content: 20% by weight) having a $T_g$ of - 52°C as an adhesive, and 2% by weight of carboxymethyl cellulose (CMC) as a thickener were added to water as a solvent and stirred to prepare a uniform negative electrode slurry. The slurry was coated on a copper foil having a thickness of 20 $\mu$m, dried at a temperature of 120°C, and compressed to manufacture a negative electrode plate having a thickness of 150 $\mu$m.

**<Manufacture of battery>**

A lithium secondary battery was manufactured by assembling a pouch-type battery in a stacking method using the manufactured positive electrode, negative electrode, and the separator manufactured in Example 1, and by injecting an electrolyte solution of ethylene carbonate (EC)/ethyl methyl carbonate (EMC)/dimethyl carbonate (DMC) = 3:5:2 (volume ratio) in which 1 M of lithium hexafluorophosphate ($LiPF_6$) was dissolved into each assembled battery. Thereby, a pouch-type lithium ion secondary battery having a capacity of 80 mAh was manufactured.

Cell resistances were measured using the manufactured lithium secondary batter and are shown in Table 1 below.

[Example 2]

Example 2 was performed in the same manner as in Example 1, except that 0.5 $\mu$m of core-shell silicon particles were used, and the results are shown in Table 1.

[Example 3]

Example 3 was performed in the same manner as in Example 1, except that 50% by weight of 1.0 $\mu$m core-shell silicon particles and 50% by weight of 0.7 $\mu$m boehmite particles were used instead of 1.0 $\mu$m core-shell silicon particles, and the results are shown in Table 1.

[Example 4]

Example 4 was performed in the same manner as in Example 1, except that 50% by weight of 0.5 $\mu$m core-shell silicon particles and 50% by weight of 0.7 $\mu$m boehmite particles were used instead of 1.0 $\mu$m core-shell silicon particles, and the results are shown in Table 1.

[Example 5]

Example 5 was performed in the same manner as in Example 1, except that the core-shell silicon particles were 1 $\mu$m and the oxide film thickness of the particles was 50 nm, and the results are listed in Table 1.

[Example 6]

Example 6 was performed in the same manner as in Example 1, except that the core-shell silicon particles were 0.5 $\mu$m and the oxide film thickness of the particles was 50 nm, and the results are listed in Table 1.

[Example 7]

Example 7 was performed in the same manner as in Example 3, except that the oxide film thickness of the silicon particles was 50 nm. The results are recorded in Table 1.

[Example 8]

Example 8 was performed in the same manner as in Example 4, except that the oxide film thickness of the silicon particles was 50 nm. The results are recorded in Table 1.

[Comparative Example 1]

Comparative Example 1 was performed in the same manner as in Example 1, except that 0.7 $\mu$m boehmite particles were used instead of 1.0 $\mu$m core-shell silicon particles, and the results are listed in Table 1, and the heat dissipation properties are shown in FIG. 2 (it can be seen that when compared with FIG. 1, the heat dissipation effect is very inferior as described in Example 1.).

[Comparative Example 2]

Comparative Example 2 was performed in the same manner as in Example 1 using silicon particles without an oxide film of 1.0 $\mu$m instead of the 1.0 $\mu$m core-shell silicon particles. The results are recorded in Table 1.

[Table 1]

| | ΔPhysical properties of coating layer | | | Thermal shrinkage **130'C, 1hr** | | Thermal shrinkage **150'C, 1hr** | | Moisture content **Dry room left** | | **Cell resistance** | | **Thermal conductivity** | **Breakdown Voltage** |
|---|---|---|---|---|---|---|---|---|---|---|---|---|---|
| | Δ Thickness **(both surfaces)** | ΔWeight | ΔGurley | MD | TD | MD | TD | Avg | std | Avg | std | In-plane direction | kV |
| | $\mu$m | g/m$^2$ | sec | % | % | % | % | ppm | ppm | mΩ | mΩ | W/mK | |
| Comparative example 1 | 5.2 | 4.0 | 101.5 | 6.3 | 5 | 50.8 | 37 | 865 | 37 | 1390 | 7 | 4.47 | 1.75 |
| Comparative example 2 | 5.2 | 4.3 | 102.1 | 3.4 | 3.0 | 4.3 | 3.9 | 798 | 45 | 1154 | 9 | 29.7 | 0.5 |
| Example 1 | 5.2 | 4.3 | 101.1 | 3.0 | 2.2 | 4.1 | 3.1 | 803 | 51 | 1344 | 12 | 25.7 | 1.73 |
| Example 2 | 5.2 | 4.5 | 108.2 | 1.4 | 2.1 | 3.0 | 3.6 | 967 | 37 | 1354 | 11 | 21.8 | 1.71 |
| Example 3 | 5.2 | 4.4 | 105.2 | 3.0 | 2.2 | 3.1 | 4.0 | 864 | 53 | 1334 | 9 | 10.2 | 1.72 |
| Example 4 | 5.2 | 4.5 | 107.8 | 2.1 | 2.5 | 3.3 | 4.2 | 903 | 24 | 1364 | 14 | 9.9 | 1.74 |
| Example 5 | 5.2 | 4.2 | 103.0 | 3.4 | 2.9 | 4.2 | 2.8 | 765 | 122 | 1389 | 8 | 15.8 | 1.71 |
| Example 6 | 5.2 | 4.4 | 109.2 | 1.1 | 1.9 | 3.1 | 3.8 | 994 | 42 | 1388 | 5 | 13.8 | 1.72 |
| Example 7 | 5.2 | 4.3 | 110.4 | 3.4 | 2.6 | 3.2 | 3.9 | 817 | 76 | 1392 | 7 | 8.9 | 1.70 |
| Example 8 | 5.2 | 4.4 | 111.8 | 2.2 | 2.7 | 3.2 | 3.0 | 920 | 64 | 1379 | 11 | 7.8 | 1.72 |

As shown in Table 1, the separator having an active layer using only core-shell silicon particles has significantly improved properties in terms of thermal shrinkage compared to the conventional boehmite (Comparative Example 1). It can be seen that for example, at 130°C, both MD and TD directions showed a low thermal shrinkage of 100% or more, and at a high temperature of 150°C, this phenomenon war further accelerated and exhibited excellent thermal shrinkage properties of 10 times or more, which was superior to the thermal shrinkage properties of conventional inorganic particles, and in particular, the thermal shrinkage properties at a high temperature were more excellent.

In addition, it can be seen that the resistance of the battery was also significantly lowered.

In addition, it can be seen that in the thermal conductivity, in-plane thermal conductivity was increased by 500% or more compared to the conventional boehmite, and even when the core-shell silicon particles of the present invention and the boehmite was mixed, the thermal conductivity properties are significantly excellent.

Therefore, according to the present invention, there is an advantage in that the thermal and electrochemical stability and performance of the battery may be significantly improved at the same time, by introducing the active layer by particles including core-shell silicon particles having an oxide film having excellent heat dissipation properties and excellent thermal conductivity.

In addition, it was confirmed that as shown in Comparative Example 2, when silicon without an oxide film was used, the role of electrically separating the positive and the negative electrode is not properly performed when used as a separator due to high conductivity, and thus, the breakdown voltage was very low, the insulation was low, and a short-circuit occurred easily. This may cause battery explosion, etc., making it impossible to apply as a separator.

Hereinabove, although the present invention has been described by specific matters, the limited embodiments, they have been provided only for assisting in a more general understanding of the present invention. Therefore, the present invention is not limited to the exemplary embodiments. Various modifications and changes may be made by those skilled in the art to which the present invention pertains from this description.

Therefore, the spirit of the present invention should not be limited to the above-mentioned embodiments, but the claims and all of the modifications equal or equivalent to the claims are intended to fall within the scope and spirit of the present invention.

## Claims

1. A separator, comprising:

   (a) a porous substrate; and
   (b) an active layer formed on one surface or both surfaces of the porous substrate and including particles including core-shell silicon particles having an oxide film shell layer.

2. The separator of claim 1, wherein the active layer includes mixed particles of core-shell silicon particles having the oxide film shell layer and other inorganic particles.

3. The separator of claim 1, wherein the core-shell silicon particles have a size of 10 to 5000 nm.

4. The separator of claim 2, wherein the inorganic particles are any one or two or more selected from a metal oxide, a metal nitride, a metal carbide, a metal carbonate, a metal hydrate, and a metal carbonitride.

5. The separator of claim 2, wherein the inorganic particles are one or two or more selected from boehmite, $Ga_2O_3$, SiC, $SiC_2$, Quartz, NiSi, Ag, Au, Cu, Al, Ag-Ni, ZnS, $Al_2O_3$, $TiO_2$, $CeO_2$, MgO, NiO, $Y_2O_3$, CaO, $SrTiO_3$, $SnO_2$, ZnO, $ZrO_2$, lithium-based inorganic materials, piezoelectric inorganic metal mixtures, and composite metal oxides of these metals.

6. The separator of claim 2, wherein the inorganic particles have a size of 0.001 to 20 $\mu m$.

7. The separator of claim 1, wherein the content of the core-shell silicon particles is 50 to 99.9% by weight of the total active layer.

8. The separator of claim 1, wherein the active layer further includes an organic binder.

9. The separator of claim 8, wherein the organic binder is any one or two or more selected from polyvinyl alcohol, polyvinyl acetate, ethylene vinyl acetate copolymer, polyethylene oxide, cellulose acetate, cellulose acetate butyrate, cellulose acetate propionate, polyvinylidene fluoride-hexafluoropropylene, polyvinylidene fluoride-trichloroethylene, polymethyl methacrylate, polyacrylonitrile, polyvinylpyrrolidone, cyanoethylpullulan, cyanoethyl polyvinyl alcohol, cyanoethyl cellulose, cyanoethyl sucrose, pullulan, carboxyl methyl cellulose, acrylonitrile styrene butadiene copolymer, polyimide, or a mixture thereof.

10. The separator of claim 1, wherein the porous substrate is one or more selected from the group consisting of high-density polyethylene, low-density polyethylene, linear low-density polyethylene, ultra-high molecular weight polyethylene, polypropylene, and copolymers thereof.

11. The separator of claim 1, wherein the separator has a thickness of 5 to 100 $\mu$m.

12. The separator of claim 1, wherein the separator has a pore size in the range of 0.001 to 10 $\mu$m, and a porosity in the range of 5 to 95%.

13. An electrochemical element comprising a positive electrode, a negative electrode, a separator, and an electrolyte, wherein the separator is the separator according to any one of claims 1 to 12.

14. The electrochemical element of claim 13, wherein the electrochemical element is a lithium secondary battery.

15. A method for manufacturing a separator, comprising: coating a dispersion solution on one surface or both surfaces of a porous substrate, the dispersion solution containing particles including silicon particles having an oxide film shell and a binder; and drying the porous substrate on which the dispersion solution is coated to form a porous active layer.

16. The method of claim 15, wherein the silicon particles having the oxide film shell are manufactured by friction of the silicon particles in an aqueous solution to oxidize the surface, or by plasma or corona treatment in air, ozone, or oxygen atmosphere to form a surface oxide layer.

17. The method of claim 15, wherein the active layer includes a mixture of silicon particles having an oxide shell and other inorganic particles.

18. The method of claim 17, wherein
the inorganic particles are one or two or more selected from boehmite, $Ga_2O_3$, SiC, $SiC_2$, Quartz, NiSi, Ag, Au, Cu, Al, Ag-Ni, ZnS, $Al_2O_3$, $TiO_2$, $CeO_2$, MgO, NiO, $Y_2O_3$, CaO, $SrTiO_3$, $SnO_2$, ZnO, $ZrO_2$, lithium-based inorganic materials, piezoelectric inorganic metal mixtures, and composite metal oxides of these metals.

19. The method of claim 15, wherein
the porous substrate is one or more selected from the group consisting of high-density polyethylene, low-density polyethylene, linear low-density polyethylene, ultra-high molecular weight polyethylene, polypropylene, and copolymers thereof.

【FIG. 1】

【FIG. 2】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190067397